**Europäisches Patentamt**

**European Patent Office**

**Office européen des brevets**

(11) Numéro de publication: **0 388 258**
**A1**

## (12) DEMANDE DE BREVET EUROPEEN

(21) Numéro de dépôt: **90400630.1**

(22) Date de dépôt: **09.03.90**

(51) Int. Cl.⁵: **F16J 15/32**

(30) Priorité: **14.03.89 FR 8903289**

(43) Date de publication de la demande:
**19.09.90 Bulletin 90/38**

(84) Etats contractants désignés:
**DE ES FR GB IT SE**

(71) Demandeur: **S.N.R. ROULEMENTS**
**Boîte Postale 17 1, rue des Usines**
**F-74010 Annecy Cédex(FR)**

(72) Inventeur: **Valette, Michel**
**Le Fraisier, Quintal**
**F-74600 Seynod(FR)**

(74) Mandataire: **Ernst-Schonberg, Michel**
**8/10, avenue Emile Zola**
**F-92109 Boulogne Billancourt(FR)**

(54) Garniture d'étanchéité entre deux pièces coaxiales.

(57)

1/ Garniture d'étanchéité entre deux pièces coaxiales (10,11) du type comportant un premier joint d'étanchéité (12) monté sur la première pièce (10) dont une lèvre d'étanchéité (13) radiale est en contact avec la deuxième pièce (11) et un deuxième joint d'étanchéité (14) monté sur ladite deuxième pièce (11) dont une extension (15) radiale s'étend en direction de la première pièce (10) de laquelle elle est séparée par une perte de charge de mise en communication de l'espace annulaire compris entre les deux joints d'étanchéité axialement séparés, caractérisé par le fait qu'une lèvre d'étanchéité (19) axiale portée par l'un des joints (12 ou 14) est en appui sur l'armature (18 ou 17) de l'autre joint (14, 12) et délimite conjointement avec la lèvre d'étanchéité radiale (13) de l'un ou l'autre joint une chambre fermée (20) garnie de graisse.

EP 0 388 258 A1

## Garniture d'étanchéité entre deux pièces coaxiales

L'invention se rapporte à une garniture d'étanchéité entre deux pièces coaxiales du type comportant un premier joint d'étanchéité monté sur la première pièce dont une lèvre d'étanchéité radiale est en contact avec la deuxième pièce, et un deuxième joint d'étanchéité monté sur la dite deuxième pièce dont une extension radiale s'étend en direction de la première pièce de laquelle elle est séparée par une perte de charge de mise en communication de l'espace annulaire compris entre les deux joints d'étanchéité axialement séparés.

Une telle garniture d'étanchéité connue par la publication US-A-4,376,541 favorise une circulation de fluide au travers de la perte de charge au cours de la rotation d'une pièce par rapport à l'autre et évite de la sorte l'introduction accidentelle d'impuretés dans l'espace annulaire défini entre les deux joints d'étanchéité.

Par contre, lorsque la garniture est au repos, l'intrusion des impuretés au contact de la lèvre d'étanchéité a pour effet la détérioration progressive de celle-ci.

La garniture d'étanchéité suivant l'invention permet de supprimer cet inconvénient.

Selon l'invention, une lèvre d'étanchéité axiale portée par l'un des joints est en appui sur l'armature de l'autre joint et délimite conjointement avec la lèvre d'étanchéité radiale de l'un ou l'autre joint une chambre fermée garnie de graisse.

La garniture d'étanchéité ainsi réalisée trouve avantageusement application dans les moyens d'étanchéité des paliers ou roulements à corps roulants disposés entre deux bagues coaxiales.

Une telle garniture d'étanchéité utilise avantageusement des joints d'étanchéité standardisés et procure à celle-ci une faculté d'absorption des défauts d'alignement ou de concentricité entre les deux pièces support des joints. Selon une particularité de l'invention la garniture d'étanchéité peut être réalisée aisément à partir d'un joint conventionnel et d'un joint spécifique.

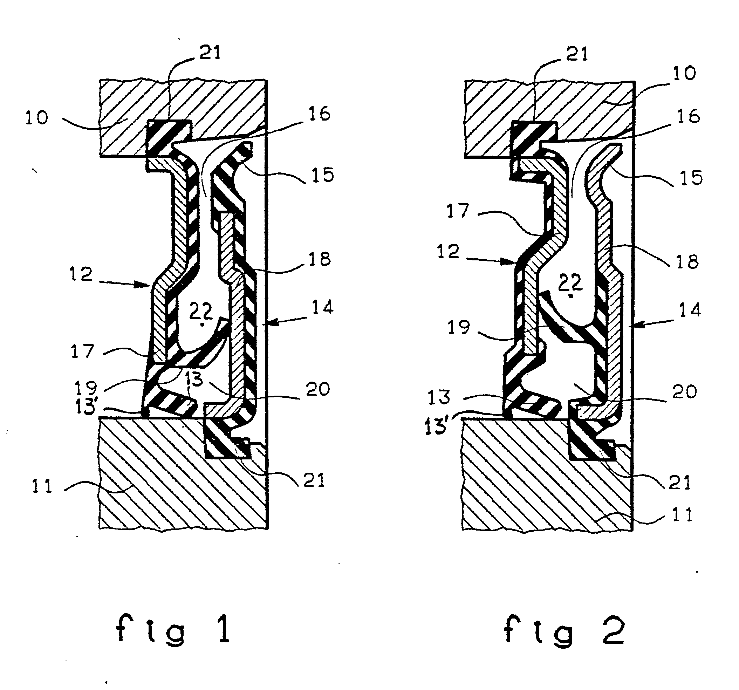

D'autres caractéristiques et avantages de l'invention apparaîtront à la lecture de la description de deux exemples de réalisation de la garniture en référence au dessin annexé dans lequel la figure 1 est une vue en coupe axiale de la garniture. La figure 2 est une vue en coupe axiale d'une variante de réalisation de la garniture.

La garniture d'étanchéité représentée est figurée dans l'état qu'elle occupe une fois montée entre deux pièces coaxiales constituées à titre d'exemple non limitatif par la bague extérieure 10 et la bague intérieure 11 d'un roulement.

La bague extérieure 10 porte un premier joint d'étanchéité 12 qui possède au moins une lèvre d'étanchéité 13 radiale en appui sur la bague intérieure 11 qui peut être complétée par une lèvre radiale additionnelle 13'.

La bague intérieure 11 porte un deuxième joint d'étanchéité 14 qui possède une extension radiale 15 qui s'étend en direction de la bague extérieure 10 de laquelle elle est séparée par une perte de charge 16.

Les joints d'étanchéité 12 - 14 axialement séparés possèdent respectivement une armature 17, 18 et délimitent une cavité annulaire 22 mise en communication avec l'extérieur du roulement par la perte de charge 16. Une lèvre d'étanchéité axiale 19 est portée par le joint intérieur 12 (fig. 1) ou par le joint extérieur 14 (fig. 2) et prend appui sur l'armature 18 (fig. 1) ou 17 (fig. 2) pour délimiter avec la lèvre radiale 13 une chambre fermée 20 garnie de graisse.

Selon l'exemple de réalisation représenté à la figure 2, le joint d'étanchéité 14 porteur de la lèvre axiale 19 est axialement décalé vers l'extérieur du roulement et est surmoulé sur son armature 18 dont l'extension radiale 15 définit, avec la bague extérieure 10, la perte de charge 16.

Il apparaît, en outre, aux figures 1 et 2 que l'un et l'autre joint 12, 14 sont encastrés, par exemple, dans des gorges de montage 21 prévues sur les bagues 10 et 11.

Les avantages de ces réalisation sont :
- L'application de joints conventionnels à lèvre radiale,
- Le positionnement des deux joints l'un par rapport à l'autre duquel résulte :
- la précision dans le contact de la lèvre axiale avec la bague,
- une faible pression de contact de la lèvre axiale,
- la possibilité d'emploi d'une lèvre axiale très souple, et d'une armature légère de joint d'étanchéité conventionnel sans déformation du joint et sans risque d'usure du déflecteur.
- Le faible encombrement de cette garniture d'étanchéité permet de l'intégrer dans des ensembles compacts.

La garniture d'étanchéité, conforme à l'invention, permet de la sorte la maîtrise du positionnement relatif des joints par leur gorge de fixation et, par voie de conséquence, le contrôle de la pression de contact pour assurer avec précision la fonction d'étanchéité de la lèvre axiale.

La lèvre axiale de faible section possède de la sorte un contact linéaire sur l'armature du joint opposé.

La faible pression de contact de la lèvre axiale autorise son contact sur une armature de faible inertie.

Par ailleurs, la faible pression de la lèvre axiale et la faible épaisseur des armatures permettent l'intégration de cette garniture dans l'encombrement d'une garniture d'étanchéité à lèvres radiales.

**Revendications**

1°) Garniture d'étanchéité entre deux pièces coaxiales (10, 11) du type comportant un premier joint d'étanchéité (12) monté sur la première pièce (10) dont une lèvre d'étanchéité (13) radiale est en contact avec la deuxième pièce (11) et un deuxième joint d'étanchéité (14) monté sur ladite deuxième pièce (11) dont une extension (15) radiale s'étend en direction de la première pièce (10) de laquelle elle est séparée par une perte de charge (16) de mise en communication de l'espace annulaire compris entre les deux joints d'étanchéité axialement séparés, caractérisée par le fait que les armatures (17, 18) des joints d'étanchéité (12, 14) délimitent une cavité annulaire (22) mise en communication avec l'extérieur du roulement par la perte de charge (16).

2° Garniture d'étanchéité selon la revendication 1, caractérisée par le fait que le joint (14) porteur de la lèvre axiale (19) est surmoulé sur une armature (18) dont la périphérie (15) définit avec la bague (10) extérieure d'un roulement, la perte de charge (16).

3°) Garniture d'étanchéité selon la revendication 1, caractérisée par le fait que le joint (12) porteur de la lèvre axiale (19) est axialement décalé vers l'intérieur du roulement par rapport à l'autre joint (14) porteur de la perte de charge (16).

4°) Garniture d'étanchéité selon l'une quelconque des revendications 1 à 3, caractérisée par le fait que la lèvre axiale (19) possède un contact linéaire à faible pression sur l'armature (17, 18) du joint opposé.

1/1

fig 1

fig 2

Office européen
des brevets

**RAPPORT DE RECHERCHE EUROPEENNE**

Numero de la demande

EP  90 40 0630

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 276 877 (RIV-SKF)<br>* Figures; revendications 1,5 * | 1-2,4 | F 16 J  15/32 |
| A | | 3 | |
| | --- | | |
| X | DE-A-3 616 999 (F.A.G.)<br>* Figures; colonne 3, ligne 4 - fin du document * | 1,3-4 | |
| A | | 2 | |
| | ----- | | |

**DOMAINES TECHNIQUES RECHERCHES (Int. Cl.5)**

F 16 J

Le présent rapport a été établi pour toutes les revendications

| Lieu de la recherche | Date d'achèvement de la recherche | Examinateur |
|---|---|---|
| LA HAYE | 29-05-1990 | NARMINIO A. |